# EUROPEAN PATENT SPECIFICATION

(11) **EP 4 415 110 B1**
(45) Date of publication and mention of the grant of the patent: **16.09.2026**
(21) Application number: 23216720.5
(22) Date of filing: 14.12.2023
(51) Int. Cl.: H01M 10/647, H01M 50/209, H01M 50/291, H01M 50/293

(54) **BATTERY PACK**
BATTERIEPACK
BLOC-BATTERIE

(30) Priority: 31.01.2023 JP 2023012961
(43) Date of publication of application: 14.08.2024
(73) Proprietor: Prime Planet Energy & Solutions, Inc., Tokyo 103-0022 (JP)
(72) Inventor: IWATA, Ryosuke, Tokyo, 103-0022 (JP); MATSUTA, Shigeki, Tokyo, 103-0022 (JP); OMURA, Tetsuji, Tokyo, 103-0022 (JP)
(74) Representative: Kuhnen & Wacker Patent- und Rechtsanwaltsbüro PartG mbB

(56) References cited:
- EP-A1- 4 113 714
- WO-A1-2022/138779
- US-A1- 2021 249 646
- US-A1- 2021 296 639
- US-A1- 2022 271 386
- US-A1- 2022 384 898

## Description

### BACKGROUND OF THE DISCLOSURE

### 1. Field

The present disclosure relates to a battery pack.

### 2. Background

In power sources for vehicle driving or the like, battery packs in which a plurality of secondary batteries (cells) are electrically connected to each other for higher output have widely been used conventionally. Conventional technical literatures related to the battery pack include Japanese Patent No. 6192467, Japanese Patent No. 6210335, and Japanese Patent Application Publication No. 2017-107648.

For example, Japanese Patent No. 6192467 discloses a battery pack including a plurality of secondary batteries that are disposed along a predetermined arrangement direction, and a spacer disposed between the secondary batteries that are adjacent in the arrangement direction and having penetration holes, which extend along a direction orthogonal to the arrangement direction, disposed in a diffused manner substantially uniformly in the entire cross section. In Japanese Patent No. 6192467, by disposing the penetration holes in the spacer in the diffused manner, the spacer has elasticity. A battery pack according to the preamble of claim 1 is disclosed by WO 2022/138779 A1 and US 2022/271386 A1.

### SUMMARY

In recent years, a secondary battery mounted on a vehicle or the like has come to have higher capacity. According to the present inventors' examination, in a case of applying the aforementioned technique to a battery pack including a secondary battery with higher capacity, there is still room for improvement. That is to say, the secondary battery with the higher capacity contains a larger amount of active material in a battery case, so that swelling occurs easily along with a charging and discharging cycle. At this time, if a spacer is too soft, the secondary battery cannot be pressed suitably after the charging and discharging cycle, resulting in that the secondary battery easily swells. On the other hand, if the spacer is too hard, in the case where the secondary battery swells, it is difficult to absorb such swelling. As a result, the swelling of the entire battery pack or deterioration in performance (for example, increase in resistance) of the secondary battery is easily caused.

The present disclosure has been made in view of the above circumstances, and its main object is to provide a battery pack including a spacer that can suppress or absorb swelling of a secondary battery.

A battery pack according to the present disclosure includes a plurality of rectangular secondary batteries that are disposed along a predetermined arrangement direction, and a spacer that is disposed between the rectangular secondary batteries that are adjacent in the arrangement direction. The spacer includes an elastic part, and the elastic part satisfies the following conditions: (1) an elastic modulus, which is obtained as an inclination of an approximation line A in a range of a compression ratio from 1 to 20% from a compression load-compression ratio curve (horizontal axis: compression ratio, vertical axis: compression load) formed by performing compression until a compression load becomes 3.9 MPa in the arrangement direction at a compression speed of 12 kPa/min, is 1 MPa or more and 10 MPa or less; and (2) a constant load compression ratio, which is obtained as a value of the horizontal axis at an intersection between the compression load-compression ratio curve and a straight line B obtained by multiplying the inclination of the approximation line A by 1.4, is 35% or more and 70% or less. The elastic part has a honeycomb structure and includes partition walls extending along the arrangement direction, and a plurality of hollow parts sectioned by the partition walls and arranged regularly in the arrangement direction.

Since the spacer includes the elastic part in the present disclosure, even when the secondary battery expands and shrinks at charging and discharging, a load can be stably applied to the secondary battery. In addition, when the elastic part satisfies the aforementioned elastic modulus and constant load compression ratio, it is possible to suppress or absorb the swelling of the secondary battery after the charging and discharging cycle relatively compared to a case where, for example, the elastic part does not satisfy the aforementioned elastic modulus and/or constant load compression ratio. As a result, the deterioration in performance of the secondary battery can be suppressed.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating a battery pack according to an embodiment;
FIG. 2 is a perspective view schematically illustrating a secondary battery in FIG. 1;
FIG. 3 is a schematic longitudinal cross-sectional view taken along line **III-III** in FIG. 2;
FIG. 4 is a perspective view schematically illustrating a spacer in FIG. 1;
FIG. 5 expresses a schematic FS curve;
FIG. 6A and FIG. 6B are schematic views of an elastic part according to a first embodiment, in which FIG. 6A is a plan view of a surface orthogonal to a thickness direction and FIG. 6B is a longitudinal cross-sectional view taken along line VIB-VIB in FIG. 6A;
FIG. 7A and FIG. 7B are schematic views of an elastic part according to a second embodiment, in which FIG. 7A is a plan view of a surface orthogonal to the thickness direction and FIG. 7B is a longitudinal cross-sectional view taken along line VIIB-VIIB in FIG. 7A; and
FIG. 8 is a plan view schematically illustrating a protrusion part of a spacer in Example 1.

### DETAILED DESCRIPTION OF THE PREFERRED EMBODIMENTS

Preferred embodiments of a battery pack disclosed herein will be described below with reference to the drawings as appropriate. Matters other than matters particularly mentioned in the present specification and necessary for the implementation of the present disclosure (for example, the general configuration and manufacturing process of a battery pack or a rectangular secondary battery that do not characterize the present disclosure) can be grasped as design matters of those skilled in the art based on the prior art in the relevant field. The battery pack disclosed herein can be implemented on the basis of the disclosure of the present specification and common technical knowledge in the relevant field.

Note that in the drawings below, the members and parts with the same operation are denoted by the same reference sign and the overlapping description may be omitted or simplified. Moreover, in the present specification, the notation "A to B" for a range signifies a value more than or equal to A and less than or equal to B, and is meant to encompass also the meaning of being "preferably more than A" and "preferably less than B".

### <First embodiment>

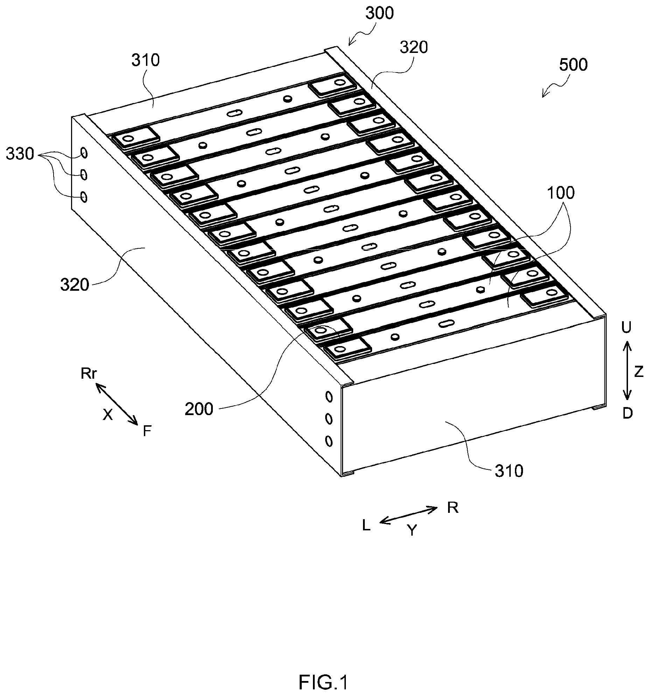

FIG. 1 is a perspective view schematically illustrating a battery pack 500 according to an embodiment. The battery pack 500 includes a plurality of rectangular secondary batteries 100 that are disposed along an arrangement direction X and a plurality of spacers 200 that are disposed between the rectangular secondary batteries 100 that are adjacent in the arrangement direction X. In this case, the battery pack 500 further includes a restriction mechanism 300. In the following description, reference signs L, R, F, Rr, U, and D in the drawings respectively denote left, right, front, rear, up, and down, and reference signs X, Y, and Z in the drawings respectively denote a thickness direction of the rectangular secondary battery 100, a long side direction that is orthogonal to the thickness direction, and an up-down direction that is orthogonal to the thickness direction and the long side direction. The thickness direction X also corresponds to the arrangement direction of the rectangular secondary batteries 100. These directions are defined however for convenience of explanation, and do not limit the manner in which the battery pack 500 is disposed.

The restriction mechanism 300 is configured to apply prescribed restriction pressure on the plurality of rectangular secondary batteries 100 and the plurality of spacers 200 from the arrangement direction X. The restriction mechanism 300 here includes a pair of end plates 310, a pair of side plates 320, and a plurality of screws 330. The pair of end plates 310 are disposed at both ends of the plurality of rectangular secondary batteries 100 in the arrangement direction X. The pair of end plates 310 hold the plurality of rectangular secondary batteries 100 and the plurality of spacers 200 therebetween in the arrangement direction X. The pair of end plates 310 are preferably made of metal. However, a part thereof may be made of resin.

The pair of side plates 320 bridge over the pair of end plates 310. The pair of side plates 320 are preferably made of metal. However, a part thereof may be made of resin. The pair of side plates 320 are fixed to the end plates 310 by the plurality of screws 330 so that a restriction load is generally about 10 to 15 kN, for example. Thus, the restriction load is applied on the plurality of rectangular secondary batteries 100 and the plurality of spacers 200 from the arrangement direction X and accordingly, the battery pack 500 is held integrally. The structure of the restriction mechanism is, however, not limited to this example. In another example, the restriction mechanism 300 may alternatively include a plurality of restriction bands, bind bars, or the like instead of the side plates 320.

The plurality of rectangular secondary batteries 100 are arranged along the arrangement direction X (in other words, the thickness direction X of the rectangular secondary battery 100) between the pair of end plates 310. The plurality of rectangular secondary batteries 100 are preferably restricted by the restriction mechanism 300. Although not illustrated in FIG. 1, when the battery pack 500 is used, the plurality of rectangular secondary batteries 100 are electrically connected to each other by a conductive member such as a busbar. The connection method is not limited in particular and may be, for example, series connection, parallel connection, multiple series-multiple parallel connection, or the like.

The rectangular secondary battery 100 is a battery that is capable of being charged and discharged repeatedly. Note that in the present specification, the term "secondary battery" refers to general power storage devices that are capable of being charged and discharged repeatedly, and corresponds to a concept encompassing, in addition to so-called storage batteries such as lithium ion secondary batteries and nickel-hydrogen batteries, capacitors such as lithium ion capacitors and electrical double-layer capacitors. The shape, the size, the number, the arrangement, and the like of the rectangular secondary batteries 100 included in the battery pack 500 are not limited to the aspect disclosed herein, and can be changed as appropriate.

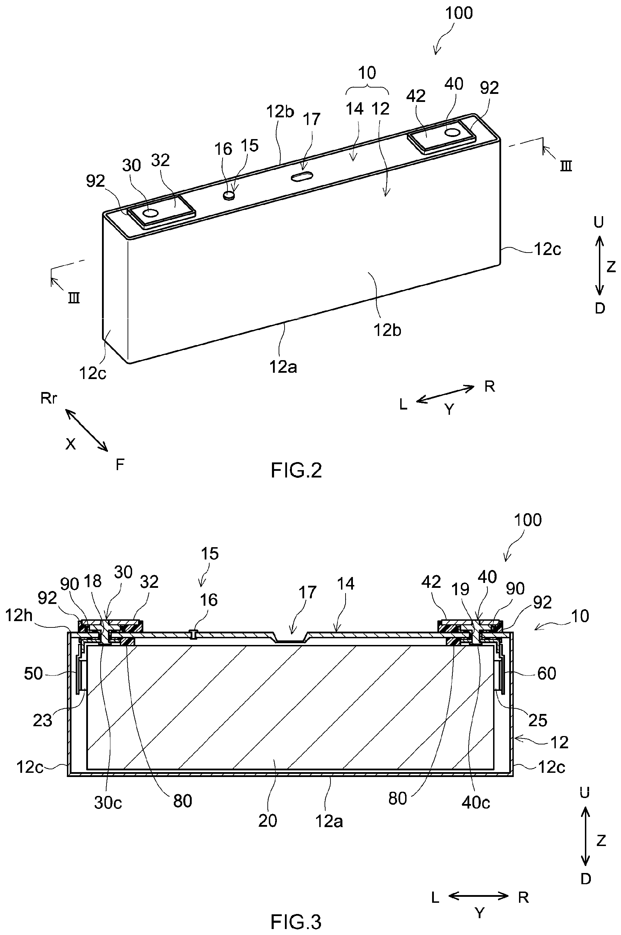

FIG. 2 is a perspective view of the rectangular secondary battery 100. FIG. 3 is a schematic longitudinal cross-sectional view taken along line **III-III** in FIG. 2. As illustrated in FIG. 3, the rectangular secondary battery 100 includes a battery case 10, an electrode body 20, a positive electrode terminal 30, a negative electrode terminal 40, a positive electrode current collecting member 50, a negative electrode current collecting member 60, and a nonaqueous electrolyte solution (not shown). The nonaqueous electrolyte solution may be similar to the conventional nonaqueous electrolyte solution, without particular limitations. The rectangular secondary battery 100 is a lithium ion secondary battery here.

The battery case 10 is a housing that accommodates the electrode body 20 and the nonaqueous electrolyte solution. As illustrated in FIG. 2, the external shape of the battery case 10 is a flat and bottomed cuboid shape (rectangular shape). A conventionally used material can be used for the battery case 10, without particular limitations. The battery case 10 is preferably made of metal, and for example, more preferably made of aluminum, an aluminum alloy, iron, an iron alloy, or the like. The battery case 10 includes an exterior body 12 and a sealing plate (lid body) 14. The battery case 10 preferably includes the exterior body 12 and the sealing plate 14 as described in the present embodiment.

As illustrated in FIG. 2, the exterior body 12 includes a bottom wall 12a with a substantially rectangular shape, a pair of long side walls 12b extending from long sides of the bottom wall 12a and facing each other, a pair of short side walls 12c extending from short sides of the bottom wall 12a and facing each other, and an opening 12h (see FIG. 3) facing the bottom wall 12a. The long side wall 12b is a surface that faces the spacer 200. The long side wall 12b is larger in area than the short side wall 12c. The sealing plate 14 is a plate-shaped member that seals the opening 12h of the exterior body 12. As illustrated in FIG. 3, the sealing plate 14 is attached to the exterior body 12 so as to cover the opening 12h. The sealing plate 14 faces the bottom wall 12a of the exterior body 12. The sealing plate 14 is substantially rectangular in shape. The battery case 10 is unified in a manner that the sealing plate 14 is joined (preferably, joined by welding) to a periphery of the opening 12h of the exterior body 12. The battery case 10 is hermetically sealed (closed).

Note that in the present specification, the term "substantially rectangular shape" encompasses, in addition to a perfect rectangular shape (rectangle), for example, a shape whose corner connecting a long side and a short side of the rectangular shape is rounded, a shape whose corner includes a notch, and the like.

As illustrated in FIG. 3, a liquid injection hole 15, a discharge valve 17, and two terminal extraction holes 18 and 19 are provided in the sealing plate 14. The sealing plate 14 is preferably provided with the liquid injection hole 15 and the discharge valve 17. The liquid injection hole 15 is provided for the purpose of injecting the nonaqueous electrolyte solution after the sealing plate 14 is assembled to the exterior body 12. The liquid injection hole 15 is sealed by a sealing member 16. The discharge valve 17 is configured to break when the pressure in the battery case 10 becomes more than or equal to a predetermined value so as to discharge the gas out of the battery case 10. The terminal extraction holes 18 and 19 penetrate the sealing plate 14 in the up-down direction Z. The terminal extraction holes 18 and 19 each have the inner diameter that enables the positive electrode terminal 30 and the negative electrode terminal 40, which have not been attached to the sealing plate 14 yet (before a caulking process), to pass therethrough.

The positive electrode terminal 30 is disposed at an end part of the sealing plate 14 on one side in the long side direction Y (left end part in FIG. 2 and FIG. 3). The negative electrode terminal 40 is disposed at an end part of the sealing plate 14 on the other side in the long side direction Y (right end part in FIG. 2 and FIG. 3). The positive electrode terminal 30 and the negative electrode terminal 40 are preferably attached to the sealing plate 14. As illustrated in FIG. 3, the positive electrode terminal 30 and the negative electrode terminal 40 extend from the inside to the outside of the sealing plate 14 through the terminal extraction holes 18 and 19. The positive electrode terminal 30 and the negative electrode terminal 40 are here caulked to a peripheral part of the sealing plate 14 that surrounds the terminal extraction holes 18 and 19 by the caulking process. Caulking parts 30c and 40c are formed at an end part of the positive electrode terminal 30 and the negative electrode terminal 40 on the exterior body 12 side (lower end part in FIG. 3).

As illustrated in FIG. 3, the positive electrode terminal 30 is electrically connected to a positive electrode current collecting part 23 of the electrode body 20 through the positive electrode current collecting member 50 inside the exterior body 12. The negative electrode terminal 40 is electrically connected to a negative electrode current collecting part 25 of the electrode body 20 through the negative electrode current collecting member 60 inside the exterior body 12. The positive electrode terminal 30 is insulated from the sealing plate 14 by an internal insulation member 80 and a gasket 90. The negative electrode terminal 40 is insulated from the sealing plate 14 by the internal insulation member 80 and the gasket 90.

As illustrated in FIG. 2 and FIG. 3, a positive electrode external conductive member 32 and a negative electrode external conductive member 42, each having a plate shape, are attached to an external surface of the sealing plate 14. The positive electrode external conductive member 32 is electrically connected to the positive electrode terminal 30. The negative electrode external conductive member 42 is electrically connected to the negative electrode terminal 40. The positive electrode external conductive member 32 and the negative electrode external conductive member 42 are members to which the conductive member such as a busbar that electrically connects the plurality of rectangular secondary batteries 100 to each other is attached. The positive electrode external conductive member 32 and the negative electrode external conductive member 42 are insulated from the sealing plate 14 by an external insulation member 92. For example, in the adjacent rectangular secondary batteries 100, the positive electrode external conductive member 32 of one rectangular secondary battery 100 and the negative electrode external conductive member 42 of the other rectangular secondary battery 100 are electrically connected to each other by the busbar or the like so as to be connected in series in the battery pack 500.

The electrode body 20 includes a positive electrode and a negative electrode. The structure of the electrode body 20 may be similar to the conventional structure thereof, without particular limitations. The number of electrode bodies 20 to be disposed in one exterior body 12 is not limited in particular and may be plural. The electrode body 20 here is a wound electrode body with a flat shape in which the positive electrode with a band shape and the negative electrode with a band shape are stacked via a separator in an insulated state and wound using a winding axis as a center. In another embodiment, the electrode body 20 may be a stack type electrode body formed in a manner that a plurality of square positive electrodes and a plurality of square negative electrodes are stacked in the insulated state.

As illustrated in FIG. 3, the positive electrode current collecting part 23 is provided at one end part of the electrode body 20 in a winding axis direction (the long side direction Y in FIG. 3). The negative electrode current collecting part 25 is provided at the other end part. The positive electrode current collecting member 50 is attached to the positive electrode current collecting part 23. The negative electrode current collecting member 60 is attached to the negative electrode current collecting part 25. The positive electrode current collecting member 50 constitutes a conductive path that electrically connects the positive electrode terminal 30 and the positive electrode of the electrode body 20. The negative electrode current collecting member 60 constitutes a conductive path that electrically connects the negative electrode terminal 40 and the negative electrode of the electrode body 20.

The spacers 200 are each disposed between the plurality of rectangular secondary batteries 100 in the arrangement direction X here. That is to say, in the arrangement direction X, the rectangular secondary batteries 100 and the spacers 200 are arranged alternately. Note that it is only necessary that the spacer 200 is disposed between at least two rectangular secondary batteries 100 that are adjacent in the arrangement direction X, and it is not always necessary that the spacer 200 is disposed between all the rectangular secondary batteries 100. Here, each of a pair of surfaces of the spacer 200 that are orthogonal to the arrangement direction X (both surfaces in the arrangement direction X) is in contact (direct contact) with the long side wall 12b of the rectangular secondary battery 100. Between the rectangular secondary battery 100 and the spacer 200, however, a different member can exist.

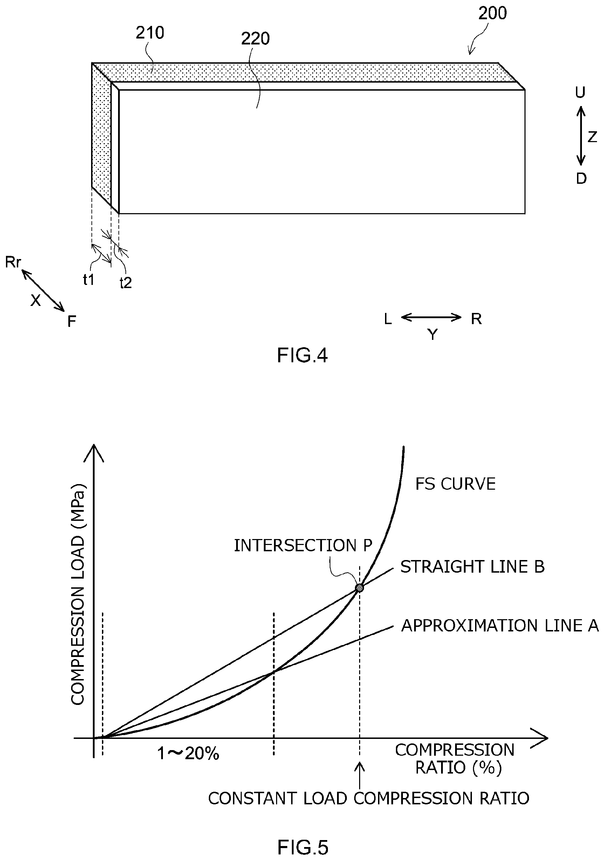

FIG. 4 is a perspective view schematically illustrating the spacer 200. As illustrated in FIG. 4, the spacer 200 includes an elastic part 210. Here, the spacer 200 further includes a heat insulation part 220. The spacer 200 preferably includes the heat insulation part 220. However, the heat insulation part 220 is not always necessary and can be omitted in another embodiment. The outer shape of each of the elastic part 210 and the heat insulation part 220 in FIG. 4 is a flat plate shape. The elastic part 210 and the heat insulation part 220 are stacked in the arrangement direction X. The spacer 200 has a two-layer structure including one elastic part 210 and one heat insulation part 220 here. **In** this case, the elastic part 210 includes a pair of surfaces (Y-Z planes in FIG. 4) orthogonal to the thickness direction X, one of which faces (here, is in contact with) the heat insulation part 220 and the other of which faces (here, is in contact with) the long side wall 12b of the battery case 10. Here, the heat insulation part 220 includes a pair of surfaces (Y-Z planes in FIG. 4) orthogonal to the thickness direction X, one of which faces (here, is in contact with) the elastic part 210 and the other of which faces (here, is in contact with) the long side wall 12b of the battery case 10.

The elastic part 210 and the heat insulation part 220 are preferably integrated, and particularly preferably integrated with a binding member. Thus, a deviation in stacking between the elastic part 210 and the heat insulation part 220 can be prevented. Additionally, the productivity and workability of the battery pack 500 can be improved. **In** the present specification, the term "integrating" refers to a concept encompassing detachable fixing using a binding member, undetachable attachment, engagement without the use of a binding member (mechanical joining), integral molding, and the like. The elastic part 210 and the heat insulation part 220 may be, for example, fixed with a tape or the like as the binding member, covered entirely and wrapped with a resin sheet, a laminate film, or the like as the binding member, attached to each other chemically or physically through an adhesive or an adhesive layer (double-sided tape or the like) as the binding member, or processed as one member by engagement or integral molding without the use of the binding member.

As illustrated in FIG. 4, the elastic part 210 and the heat insulation part 220 have approximately the same area of the Y-Z plane (machining error is allowed). **In** the elastic part 210 and the heat insulation part 220, the area of the Y-Z plane is preferably 50% or more, more preferably 70% or more, and particularly preferably 80% or more of the area of the long side wall 12b of the battery case 10 (surface facing the spacer 200). Thus, the effect of the art disclosed herein can be achieved at a high level.

As illustrated in FIG. 4, a thickness t1 of the elastic part 210 is preferably 5% or more, for example 5 to 15% of the thickness of the rectangular secondary battery 100 (length in thickness direction X) in a state before the spacer 200 is assembled to the battery pack 500 and compressed. A thickness t2 of the heat insulation part 220 is preferably 2% or more, for example 2 to 20%, and more preferably 5% or more, for example 5 to 15% of the thickness of the rectangular secondary battery 100 (length in thickness direction X) in the state before the spacer 200 is assembled to the battery pack 500 and compressed. The total of the thickness t1 and the thickness t2 is preferably 7% or more, for example 7 to 35%, and more preferably 10% or more, for example 10 to 30% of the thickness of the rectangular secondary battery 100 (length in thickness direction X).

However, the shape, the size, the arrangement, and the like of the elastic part 210 and the heat insulation part 220 can be determined as appropriate in accordance with the shape, the size, the capacity (degree of expansion and shrinkage) of the rectangular secondary battery 100, for example. In another example, the spacer 200 may be formed by only the elastic part 210, or have a structure with three or more layers. For example, the spacer 200 may have a three-layer structure (heat insulation part 220/elastic part 210/heat insulation part 220) where the heat insulation part 220 is disposed on both side surfaces of the elastic part 210 in the arrangement direction X, or on the contrary, a three-layer structure (elastic part 210/heat insulation part 220/elastic part 210) where the elastic part 210 is disposed on both side surfaces of the heat insulation part 220 in the arrangement direction X. The spacer 200 may have a structure with four or more layers or may include a part other than the elastic part 210 and the heat insulation part 220.

The elastic part 210 is a part configured to be elastically deformable in the arrangement direction X. Therefore, when the rectangular secondary battery 100 expands at the charging or the like and the load applied to the elastic part 210 increases, the elastic part 210 is compressed. On the other hand, when the rectangular secondary battery 100 shrinks at the discharging or the like and the load applied to the elastic part 210 decreases, the elastic part 210 is restored to the original shape. Therefore, even when the rectangular secondary battery 100 expands and shrinks at the charging and discharging, the rectangular secondary battery 100 can be stably pressed with a predetermined restriction load and the load necessary to maintain the performance can be stably applied by the provision of the elastic part 210 in the spacer 200.

In this embodiment, the elastic part 210 has an elastic modulus and a constant load compression ratio each satisfying a predetermined range to be described below. Thus, swelling of the rectangular secondary battery 100 can be suppressed or absorbed for a long time. That is to say, repeatedly charging and discharging the rectangular secondary battery 100 having the high capacity in particular may result in swelling; however, in such a case, when the elastic part 210 satisfies the predetermined elastic modulus, it is possible to suitably suppress or absorb the swelling after the charging and discharging cycle and moreover, when the constant load compression ratio satisfies the predetermined range, it is possible to keep such an effect for a longer time. As a result, the application of an excessive restriction load that is more than or equal to a predetermined level to the rectangular secondary battery 100 or the increase in interelectrode distance between the positive and negative electrodes, which results in the deterioration in performance (for example, Li precipitation), can be suppressed. Moreover, the spacer 200 can be thinned relatively and the volume energy density of the battery pack 500 can be improved, compared to the aspect as disclosed in, for example, Japanese Patent Application Publication No. 2017-107648.

In the present embodiment, the elastic part 210 has an elastic modulus of 1 MPa to 10 MPa. As the numeral of the elastic modulus is smaller, the hardness is lower and the elastic deformation in the thickness direction X (arrangement direction X) occurs more easily. The elastic part 210 has an elastic modulus of preferably 5 MPa or less, and more preferably 3.3 MPa or less. When the elastic modulus of the elastic part 210 is a predetermined value or less, in the case where the rectangular secondary battery 100 is charged or the rectangular secondary battery 100 swells, the spacer 200 is crushed easily and the swelling can be absorbed easily. As a result, the effect of the art disclosed herein can be achieved at the high level, which will also be described in Examples below. The elastic part 210 has an elastic modulus of preferably 1.5 MPa or more, and more preferably 3.0 MPa or more. When the elastic modulus of the elastic part 210 is a predetermined value or more, in the case where the rectangular secondary battery 100 swells, the spacer 200 resists to suppress the swelling easily.

In the present specification, the term "elastic modulus" refers to the value obtained as follows. That is, first, a test piece in which each of a pair of surfaces orthogonal to the thickness direction X has a square shape of 5 cm × 5 cm is prepared and the initial thickness (mm) is measured with a micrometer. Next, using a conventionally known compression testing device, the test piece is compressed with a constant speed in the thickness direction X until the compression load on the test piece per unit area becomes 3.9 MPa under a condition of a compression speed of 30 N/min (12 kPa/min); thus, the compression load (MPa) and the thickness after the compression (mm) are measured. Next, from the compression load (MPa) and the thickness after the compression (mm), a compression load-compression ratio curve (FS curve) is formed, in which the horizontal axis represents a compression ratio (%) obtained by (initial thickness - thickness after compression) (mm)/initial thickness (mm) × 100 and the vertical axis represents the compression load (N/mm² = MPa). FIG. 5 expresses the schematic FS curve. As expressed in FIG. 5, the inclination of an approximation line A in the range of the compression ratio of 1 to 20% in the FS curve (horizontal axis: compression ratio, vertical axis: compression load) is the elastic modulus (MPa).

When the thickness of the elastic part 210 that is placed at rest for two hours after the aforementioned compression test is measured with the micrometer, the thickness of the elastic part 210 after being placed at rest for two hours is more preferably within -20% of the initial thickness. Thus, in the case where the rectangular secondary battery 100 repeats the shrinkage and expansion with the charging and discharging cycle, the elastic part 210 is restored to the original shape easily. Moreover, the swelling of the rectangular secondary battery 100 can be absorbed easily.

In the present embodiment, the elastic part 210 has a constant load compression ratio of 35% or more and 70% or less. The constant load compression ratio is related with the amount of swelling of the rectangular secondary battery 100 that the spacer can absorb, and it can be said that as the value is larger, the amount of absorbing the swelling is larger. The elastic part 210 has a constant load compression ratio of preferably 40% or more. When the constant load compression ratio is a predetermined value or more, in the case where the rectangular secondary battery 100 swells, such swelling can be absorbed efficiently for a long time.

Note that in the present specification, the term "constant load compression ratio" refers to a value obtained as follows from the FS curve (horizontal axis: compression ratio, vertical axis: compression load) for the elastic modulus. That is to say, first, as expressed in FIG. 5, the inclination of the approximation line A for the elastic modulus is multiplied by 1.4 to obtain a straight line B. Next, an intersection P between this straight line B and the FS curve is obtained. Then, a perpendicular line is drawn from this intersection P to the horizontal axis and an intersection between the horizontal axis and the perpendicular line is defined as the constant load compression ratio. That is to say, the value of the horizontal axis at the intersection P is the constant load compression ratio. As expressed in FIG. 5, as the compression ratio is higher, the compression load is higher in a way of quadratic function in the FS curve. That is, when the value of the constant load compression ratio is larger, it means that the elastic modulus obtained from the range of the compression ratio from 1 to 20% changes less easily (increases less easily) even on the side of the higher compression ratio. Therefore, when the constant load compression ratio is a predetermined value or more, the elastic modulus of the elastic part 210 changes less easily and if the rectangular secondary battery 100 swells, such swelling can be absorbed efficiently for a long time.

In consideration of the ranges of the elastic modulus and the constant load compression ratio described above, the elastic part 210 is preferably formed of a polymer material. Examples of the polymer material include rubbers (thermosetting elastomers) such as silicone rubber, fluorine rubber, urethane rubber, natural rubber, styrene butadiene rubber, butyl rubber, ethylene propylene rubber (EPM, EPDM), butadiene rubber, isoprene rubber, and norbornene rubber. Among these, EPDM and silicone rubber are preferable. The elastic part 210 is preferably made of rubber.

Note that in a case where the elastic part 210 is formed of thermoplastic resin such as polypropylene (PP) or polyethylene (PE), or is formed of metal such as aluminum, ceramic, glass, or the like as described in Japanese Patent Application Publication No. 2017-107648, it is considered that the aforementioned range of the elastic modulus and/or constant load compression ratio is not satisfied generally although depending on the structure or the like. For example, the elastic modulus becomes much higher than 10 MPa, that is, the elastic deformation in the thickness direction X is considered to occur less easily relatively compared to the art disclosed herein.

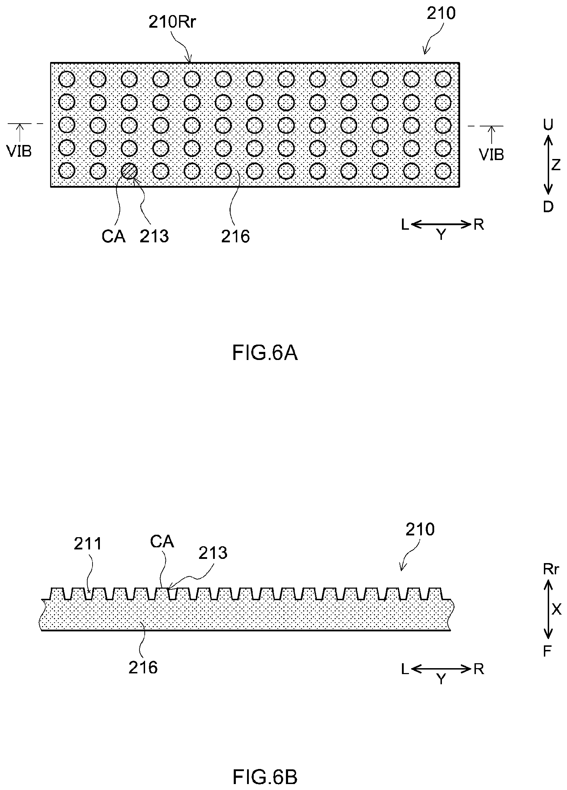

FIG. 6A and FIG. 6B are schematic views of the elastic part 210. FIG. 6A is a plan view of a rear surface 210Rr (first Y-Z plane) that is orthogonal to the thickness direction X (arrangement direction X) and FIG. 6B is a longitudinal cross-sectional view taken along line VIB-VIB in FIG. 6A. As illustrated in FIG. 6B, in the present embodiment, the elastic part 210 has a protrusion structure. The elastic part 210 includes a base part 216 with a flat plate shape, and a plurality of protrusion parts 213 projecting from the base part 216 to the arrangement direction X. By the elastic part 210 with the protrusion structure, it is easy to satisfy the aforementioned ranges of the elastic modulus and the constant load compression ratio and the elastic function can be achieved stably even after the charging and discharging cycle. The protrusion part 213 is one example of a projection part extending in the arrangement direction X.

The base part 216 expands along a front surface (second Y-Z plane) of the elastic part 210 as can be seen from FIG. 6A and FIG. 6B. The base part 216 is a part that does not include a pore here. The base part 216 is a non-porous (solid structure) part. As illustrated in FIG. 6B, the base part 216 is provided on a surface (front surface in FIG. 6B) that faces the heat insulation part 220 here. In another embodiment, however, the base part 216 may be provided on a surface that faces the long side wall 12b of the rectangular secondary battery 100. The plurality of protrusion parts 213 project from the base part 216 along the thickness direction X (arrangement direction X). The provision of the base part 216 makes it easier to align with the heat insulation part 220 and can improve the productivity or workability when the spacer 200 is integrated. The thickness of the base part 216 (length in the arrangement direction X) is preferably 0.1 mm or more, and more preferably 0.3 mm or more. The thickness of the base part 216 is preferably 5 mm or less, and more preferably 2 mm or less.

The height (length in the up-down direction Z) and/or the width (length in the long side direction Y) of the base part 216 preferably coincides substantially with the height and/or the width of the long side wall 12b of the rectangular secondary battery 100. Thus, it becomes easier to align with the rectangular secondary battery 100 and the productivity or workability of the battery pack 500 can be improved.

The plurality of protrusion parts 213 are provided so as to be integrated with the base part 216. The plurality of protrusion parts 213 are the same in size, shape, and the like here. The protrusion parts 213 are regularly arranged on the Y-Z plane. On the Y-Z plane, a space 211 is secured between the protrusion parts 213. The protrusion part 213 extends from the base part 216 toward the long side wall 12b of the rectangular secondary battery 100 here. The outer shape of the protrusion part 213 is a truncated conical shape. The cross-sectional shape of the protrusion part 213 in the thickness direction X (arrangement direction X) is preferably a trapezoidal shape as illustrated in FIG. 6B. Thus, the collapse of the protrusion along with the charging and discharging cycle, which results in the decrease in elastic function, can be suppressed. Note that the protrusion part 213 is non-porous (a solid structure) here; however, a cavity (hollow) part may be provided internally.

As illustrated in FIG. 6B, the protrusion part 213 includes a contact region CA, which is in direct contact (contact) with the rectangular secondary battery 100, at an end part in the thickness direction X (arrangement direction X). As illustrated in FIG. 6A, the contact region CA of each protrusion part 213 has a circular shape in a plan view here. Although not limited in particular, in a case where the material of the elastic part 210 is EPDM or silicone rubber, an area S of the contact region CA of one protrusion part 213 is preferably 1.5 mm² or more and more preferably 3 mm² or more. In addition, the area S of the contact region CA of one protrusion part 213 is preferably 100 mm² or less. The total of the areas S (total area) of the plurality of protrusion parts 213 per unit area of the elastic part 210 (25 cm²) is preferably 1.2 to 18 cm²/25 cm² and more preferably 1.5 to 15 cm²/25 cm². When the area S is a predetermined value or more, the decrease in elastic function can be suppressed. When the area S is a predetermined value or less, the elastic modulus and the constant load compression ratio of the elastic part 210 can be adjusted to be in the aforementioned ranges easily.

Although not limited in particular, in a case where the material of the elastic part 210 is rubber, such as EPDM or silicone rubber, a ratio (r/S) of an outer peripheral length r (mm) of the contact region CA to the area S (mm²) of the contact region CA is preferably 0.6 or more and 2.7 or less. The ratio (r/S) is more preferably 0.66 or more, still more preferably 0.8 or more, and particularly preferably 0.9 or more. In a case where the elastic part 210 has the protrusion structure as described in the present embodiment, the ratio (r/S) is still more preferably 1.6 or more. When the ratio is a predetermined value or more, the elastic modulus and the constant load compression ratio of the elastic part 210 can be adjusted to be in the aforementioned ranges easily. The ratio (r/S) is more preferably 2.67 or less, and still more preferably 2.0 or less. When the ratio is a predetermined value or less, the structure (here, protrusion structure) of the elastic part 210 can be maintained stably and the decrease in elastic function can be suppressed.

The elastic modulus and the constant load compression ratio of the elastic part 210 as described above can be adjusted by, for example, the material (kind and hardness) of the elastic part 210, the number, the size, the shape, and the arrangement of the protrusion parts 213, the area S of the contact region CA, the ratio (r/S) of the outer peripheral length r of the contact region CA to the area S of the contact region CA, and the like as described above.

The heat insulation part 220 is disposed between the elastic part 210 and the rectangular secondary battery 100 in the arrangement direction X. The heat insulation part 220 is a part with lower heat conductivity than the elastic part 210. In other words, the heat insulation part 220 is the part with a higher heat insulation property than the elastic part 210. Therefore, even if the rectangular secondary battery 100 generates heat at the charging and discharging, for example, the provision of the heat insulation part 220 makes it difficult for the elastic part 210 to be influenced by the heat generation by the heat insulation effect of the heat insulation part 220. Thus, the thermal deterioration of the elastic part 210 can be suppressed. Additionally, even if the temperature of the rectangular secondary battery 100 increases, the conduction of the heat to the adjacent rectangular secondary battery 100 can be suppressed. Therefore, a series of heat generation of the rectangular secondary batteries 100 can be suppressed and the entire battery pack 500 can be prevented from having excessively high temperature.

From such a viewpoint, the heat conductivity of the heat insulation part 220 is preferably 0.15 W/(m·K) or less and more preferably 0.1 W/(m·K) or less. It is more preferable that the heat insulation part 220 be disposed on each of both surfaces of the elastic part 210 in the arrangement direction X. Thus, the effect of the art disclosed herein can be achieved at the particularly high level. In the present specification, the heat conductivity is a value measured based on JIS A1412-1 (2016) of Japanese Industrial Standards.

The heat insulation part 220 may be a porous body. Thus, by incorporating air in the heat insulation part 220, a high heat insulation function can be achieved. The heat insulation part 220 preferably includes, for example, inorganic filler (for example, ceramics such as alumina) and a polymer material. The heat insulation part 220 is preferably formed using the inorganic filler as a main body (a component occupying the maximum mass among the constituent components is the main body and, for example, when the entire constituent components is 100 mass%, the component that occupies 50 mass% or more is the main body).

**In** a preferred aspect, for example, when the spacer 200 is assembled to the battery pack 500 and compressed, a part of the elastic part 210 is disposed in the heat insulation part 220. **In** one example, the elastic part 210 includes one or a plurality of convex parts, the heat insulation part 220 has a concave part corresponding to such a convex part, and the convex part of the elastic part 210 is disposed in the concave part of the heat insulation part 220. More specifically, for example, a part of the protrusion parts 213 of the elastic part 210 (part near the heat insulation part 220) exists inside the heat insulation part 220. **In** another example, on the contrary, the heat insulation part 220 includes one or a plurality of convex parts, the elastic part 210 has a concave part corresponding to such a convex part, and the convex part of the heat insulation part 220 is disposed in the concave part of the elastic part 210. More specifically, for example, the convex part of the heat insulation part 220 is stuck between the protrusion parts 213 (stuck in a part corresponding to the space 211) of the elastic part 210. Thus, the integrity between the elastic part 210 and the heat insulation part 220 can be improved and the deviation in stacking can be prevented. **In** addition, as the elastic part 210 and the heat insulation part 220 overlap partially in the thickness direction X, the spacer 200 can be thinned and the volume energy density of the battery pack 500 can be improved.

The battery pack 500 is usable in various applications. Since the rectangular secondary battery 100 easily swells in the charging and discharging cycle in particular, the battery pack 500 can be suitably used in the application where high capacity is needed, for example, can be used as a motive power source for a motor (power source for driving) that is mounted in a vehicle such as a passenger car or a truck. The vehicle is not limited to a particular type, and may be, for example, a plug-in hybrid electric vehicle (PHEV), a hybrid electric vehicle (HEV), or a battery electric vehicle (BEV).

### <Second embodiment>

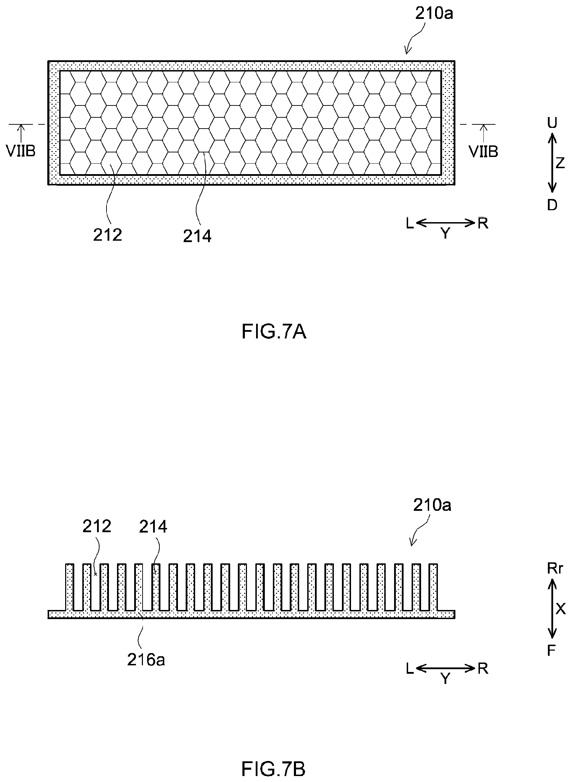

FIG. 7A and FIG. 7B are schematic views of an elastic part 210a. FIG. 7A is a plan view of a surface (first Y-Z plane) that is orthogonal to the thickness direction X (arrangement direction X) and FIG. 7B is a longitudinal cross-sectional view taken along line VIIB-VIIB in FIG. 7A. A second embodiment is similar to the first embodiment described above except that the spacer includes the elastic part 210a instead of the elastic part 210. The outer shape of the elastic part 210a is a flat plate similarly to the elastic part 210 in the first embodiment. As illustrated in FIG. 7A, the elastic part 210a in this embodiment has a hole structure. By the elastic part 210a with the hole structure, it is easy to satisfy the aforementioned ranges of the elastic modulus and the constant load compression ratio and the elastic function can be achieved stably even after the charging and discharging cycle. A plurality of hollow parts 212 extend along the thickness direction X (arrangement direction X); thus, the structure can be stably maintained and the decrease in elastic function can be suppressed relatively compared to a case where, for example, the plurality of hollow parts 212 extend perpendicular to the arrangement direction X.

The elastic part 210a includes partition walls (ribs) 214 extending along the thickness direction X (arrangement direction X), and the plurality of hollow parts 212 sectioned by the partition walls 214 and arranged regularly in the thickness direction X (arrangement direction X). The elastic part 210a further includes a base part 216a here. The property and the like of the base part 216a may be similar to those of the base part 216 in the first embodiment. However, the base part 216a is not essential and may be omitted in another embodiment. The partition wall 214 is one example of the projection part extending in the arrangement direction X.

The partition walls 214 form the frame of the elastic part 210a. As illustrated in FIG. 7A, the partition walls 214 are regularly provided on a rear surface (first Y-Z plane). The partition walls 214 extend along the thickness direction X (arrangement direction X) (from a front side to a depth side in FIG. 7A). The partition walls 214 section between the plurality of hollow parts 212.

The plurality of hollow parts 212 are sectioned by the partition walls 214, and are arranged regularly along the thickness direction X (arrangement direction X). The plurality of hollow parts 212 are independent from each other here. In these points, the hollow parts 212 are different from a porous material (sponge shape) with pores communicating in a three-dimensional mesh shape. Although not limited in particular, the size (volume) of one hollow part 212 may be 1 mm³ or more. The hollow part 212 has a hexagonal shape in the Y-Z plan view here. That is to say, the hollow part 212 here has a hexagonal columnar shape along the thickness direction X.

As illustrated in FIG. 7B, one end part (front end part in FIG. 7B) of the hollow part 212 in the thickness direction X (arrangement direction X) is closed here. A surface of the hollow part 212 on the side that faces the heat insulation part 220 is closed by the base part 216a here. The thickness of the base part 216a (length in the arrangement direction X) may not be uniform in the Y-Z plane and a thick or thin part may exist in a part. Moreover, the area of the Y-Z plane of the base part 216a may be more than or equal to the area of the Y-Z plane where the partition walls 214 exist.

The elastic part 210a has a comb-like shape in a cross-sectional view in the thickness direction X. By closing one end part of the hollow part 212 in this manner, integration with the heat insulation part 220 becomes easy and the workability can be improved. On the other hand, as illustrated in FIG. 6A, the other end part (rear end part) of the hollow part 212 in the thickness direction X (arrangement direction X) is open. Here, the surface on the side that faces the long side wall 12b of the rectangular secondary battery 100 is open. The elastic part 210a has a non-penetration hole structure. However, regardless of whether the base part 216a is included or not, the hollow part 212 may be a penetration hole that has both end parts in the thickness direction X (arrangement direction X) open (opening). The hollow part 212 may be a polygonal columnar penetration hole structure (more specifically, hexagonal columnar penetration hole structure) or a circular penetration hole structure. **In** the present specification, the term "hole structure" refers to a general structure including the plurality of hollow parts 212 arranged regularly along the thickness direction X (arrangement direction X).

The elastic part 210a has a honeycomb structure here. Thus, the hollow parts 212 can be maintained easily even when the charging and discharging cycle is repeated, and the elastic function can be achieved stably even after the charging and discharging cycle. **In** the present specification, the term "honeycomb structure" refers to a structure included in "hole structure" and refers to the general three-dimensional space filling with stereoscopic figures arranged without a space therebetween, without being limited to the case in which the shape of the hollow part 212 is hexagonal in the Y-Z plan view.

The ratio of the total area of the plurality of hollow parts 212 to the entire area of the elastic part 210a in the surface (Y-Z plane) that is orthogonal to the thickness direction X (arrangement direction X) is preferably 0.25 or more, and more preferably 0.35 to 0.8. By setting the ratio to be a predetermined value or more, when the rectangular secondary battery 100 swells, the spacer 200 is crushed easily to absorb the swelling easily. When the ratio is a predetermined value or less, the hollow parts 212 can be maintained stably and the durability of the elastic part 210 can be improved.

**In** the present embodiment, the ratio (r/S) of the outer peripheral length r of the contact region to the area S of the contact region described above can be obtained as the ratio (r/S) of the total outer peripheral length r (mm) of the contact regions CA of the entire partition walls 214 to the total area S (mm²) of the contact regions of the entire partition walls 214. Moreover, "the total of the areas S (total area) of the plurality of protrusion parts 213" can be read as "the total area S of the contact regions of the entire partition walls 214".

Several Examples relating to the present disclosure will be explained below, but the disclosure is not meant to be limited to these Examples.

### <Battery pack manufacture 1>

First, a plurality of lithium ion secondary batteries were prepared. Next, spacers including elastic parts (Examples 1 to 7 and Comparative Examples 1 to 4) were prepared. Note that when the thickness of the lithium ion secondary battery was 1, the thickness of the elastic part was 0.075 times that of the lithium ion secondary battery (7.5% of the thickness of the lithium ion secondary battery). Each of the elastic parts of the spacers (Examples 1 to 7 and Comparative Examples 1 to 4) has the elastic modulus and the constant load compression ratio shown in Table 1.

The elastic part of each spacer includes a material shown in Table 1, and has a shape shown in Table 1. For example, each of the spacers in Examples 1, 3, 4, 5, and 6 and Comparative Examples 1 and 2 has the protrusion structure including the base part formed of EPDM and having a flat plate shape and a non-porous (solid) structure, and the plurality of protrusion parts extending from the base part to the thickness direction. The spacer in Example 2 has the honeycomb structure including the partition walls formed of silicone rubber and extending along the thickness direction, and the plurality of hollow parts sectioned by the partition walls and arranged regularly in the thickness direction. The spacer in Example 7 has a porous sheet shape formed of silicone foam and including pores (with irregular shapes) communicating with each other in a three-dimensional mesh shape. Each of the spacers in Comparative Examples 3 and 4 has a porous sheet shape formed of urethane foam and including pores (with irregular shapes) communicating with each other in a three-dimensional mesh shape.

### <Calculation of ratio (r/S)>

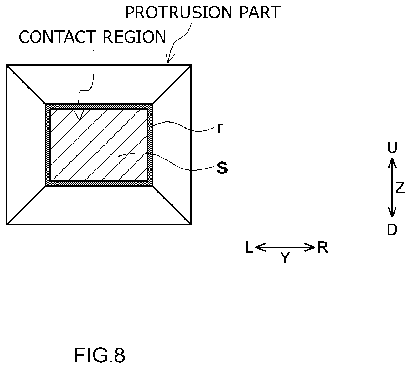

FIG. 8 is a plan view schematically illustrating one protrusion part of the spacer in Example 1. In Example 1, the contact region of the protrusion part has a quadrangular shape in a plan view. In Examples 1, 3, 4, 5, and 6 and Comparative Examples 1 and 2 with the protrusion structure, as illustrated in FIG. 8, the ratio (r/S) of the outer peripheral length r (mm) of the contact region of one protrusion part to the area S (mm²) of the contact region of one protrusion part was calculated. In Example 2 with the honeycomb structure, the ratio (r/S) of the total outer peripheral length r (mm) of the contact regions of the entire partition walls to the total area S (mm²) of the contact regions of the entire partition walls was calculated. The results are shown in Table 1.

### <Battery pack manufacture 2>

Next, the lithium ion secondary battery and the spacer were held between a pair of restriction jigs in the arrangement direction and restricted so that the thickness of the spacer became 80% of that before the restriction; thus, test batteries were manufactured. Then, the distance between the pair of restriction jigs (initial thickness) was measured.

### <Cycle test>

Under an environment with a temperature of 40°C, the state of charge (SOC) of the secondary battery was adjusted to 15%, constant-current constant-voltage charging was performed at a charging rate of 0.2 C until the SOC became 95%. Then, after 5-minute rest, constant-current constant-voltage discharging was performed at a discharging rate of 0.5 C until the SOC became 15%, which was followed by 90-minute rest. These charging and discharging are regarded as one cycle, and 200 cycles were performed.

### <Evaluation on change in thickness of battery pack>

After the cycle test, the distance between the pair of restriction jigs (thickness after cycles) was measured again and compared with the initial thickness. The results are shown in Table 1. In Table 1, an "excellent" expresses a case in which the thickness after the cycles is 1.03 times or less the initial thickness, a "good" expresses a case in which the thickness after the cycles is more than 1.03 times and 1.05 times or less the initial thickness, and a "Poor" expresses a case in which the thickness after the cycles is more than 1.05 times the initial thickness. The numeral closer to 1 indicates that the swelling of the test battery including the spacer was suppressed.

### <Determination of presence or absence of Li precipitation>

The lithium ion secondary battery after the cycle test was disassembled and for the separator and the negative electrode of the electrode body, whether Li precipitation occurred or not was determined with eyes. The results are shown in Table 1.

### [Table 1]

**Table 1**

| | Elastic part of spacer | | | | | After cycle test | |
|---|---|---|---|---|---|---|---|
| | Material | Shape | Constant load compression ratio (%) | Elastic modulus (MPa) | r/S | Change in thickness | Li precipitation |
| Example 1 | EPDM | Protrusion structure (base part + protrusion part) | 41 | 1.5 | 1.6 | excellent | Not occurred |
| Example 2 | Silicone rubber | Honeycomb structure | 40 | 3.3 | 0.9* | excellent | Not occurred |
| Example 3 | EPDM | Protrusion structure (base part + protrusion part) | 70 | 1.0 | 2.67 | excellent | Not occurred |
| Example 4 | EPDM | Protrusion structure (base part + protrusion part) | 50 | 1.5 | 2.0 | excellent | Not occurred |
| Example 5 | EPDM | **Protrusion** structure (base part + protrusion part) | 38 | 5.0 | 0.8 | good | Not occurred |
| Example 6 | EPDM | Protrusion structure (base part + protrusion part) | 35 | 10 | 0.66 | good | Not occurred |
| Example 7 | Silicone foam | Porous sheet | 35 | 1.0 | - | good | Not occurred |
| Comparative Example 1 | EPDM | Protrusion structure (base part + protrusion part) | 33 | 7.7 | 0.5 | poor | Not occurred |
| Comparative Example 2 | EPDM | Protrusion structure (base part + protrusion part) | 30 | 1.0 | 0.4 | poor | Not occurred |
| Comparative Example 3 | Urethane foam | Porous sheet | 50 | 0.5 | - | poor | Occurred |
| Comparative Example 4 | Urethane foam | Porous sheet | 70 | 0.5 | - | good | Occurred |

| | | | | | | | |
|---|---|---|---|---|---|---|---|
| *: (Total outer peripheral length/total area) | | | | | | | |

As shown in Table 1, the thickness after the cycles was relatively large in Comparative Examples 1 to 3. It is considered that this is because the elastic part of the spacer had a constant load compression ratio of less than 35%, which is low, so that the swelling of the secondary battery was not fully absorbed in Comparative Examples 1 and 2. In Comparative Example 3, moreover, it is considered that the elastic modulus of the elastic part of the spacer was low and the swelling of the secondary battery was not able to be suppressed.

Additionally, as shown in Table 1, in Comparative Examples 3 and 4, the Li precipitation was observed after the cycle test. It is considered that this is because the elastic part of the spacer had an elastic modulus of less than 1 MPa, which is low, so that the load on the secondary battery was insufficient and the interelectrode distance between the positive and negative electrodes increased, resulting in the inhomogeneous charging and discharging reaction.

In contrast to these comparative examples, the thickness after the cycles was suppressed to be small relatively and the Li precipitation was not observed in Examples 1 to 7. The reason is considered as follows: when the elastic part satisfies the predetermined elastic modulus, the swelling of the secondary battery after the charging and discharging cycle can be suppressed or absorbed suitably and moreover, when the constant load compression ratio is the predetermined value or more, the effect can be maintained longer (in a direction where the number of cycles increases). These results indicate the significance of the art disclosed herein.

Although the preferable embodiments of the present disclosure have been described above, they are merely examples. The present disclosure can be implemented in various other modes. The present disclosure can be implemented based on the contents disclosed in the present specification and the technical common sense in the relevant field. The techniques described in the scope of claims include those in which the embodiments exemplified above are variously modified and changed. For example, a part of the aforementioned embodiment can be replaced by the following modification, and another modification can be added to the aforementioned embodiment. Additionally, the technical feature may be deleted as appropriate unless such a feature is described as an essential element.
(1) For example, in the aforementioned first and second embodiments, the outer shape of each of the elastic part 210 and the heat insulation part 220 is a flat plate shape and the surface thereof (Y-Z plane) orthogonal to the thickness direction X (arrangement direction X) has approximately the same area. However, the present disclosure is not limited to this example. The elastic part 210 and the heat insulation part 220 may be different in area of the Y-Z plane. **In** a modification, the area of the Y-Z plane of the elastic part 210 is preferably less than or equal to the area of the Y-Z plane of the heat insulation part 220. When the area of the heat insulation part 220 is large, the influence from the heat generation of the rectangular secondary battery 100 can be reduced further and the thermal deterioration of the elastic part 210 can be suppressed at the high level.
(2) For example, in the first embodiment described above, the elastic part 210 has the protrusion structure. The outer shape of each of the plurality of protrusion parts 213 is a truncated conical shape, and the contact region CA of each protrusion part 213 has a circular shape in a plan view. However, the present disclosure is not limited to this example. The outer shape of the protrusion part 213 may be a cylindrical shape, a polygonal columnar shape (such as a triangular columnar shape or a quadrangular columnar shape), or the like. The contact region CA may have a circular shape, a polygonal shape (such as a triangular shape or a quadrangular shape), or the like in a plan view.
(3) For example, in the aforementioned second embodiment, the plurality of hollow parts 212 of the elastic part 210a are independent from each other. However, the present disclosure is not limited to this example. The plurality of hollow parts 212 may communicate with each other through a hole part penetrating the partition wall 214. **In** other words, the elastic part 210a may have a hole part that communicates between the plurality of hollow parts 212. In such an aspect, the air can enter and exit the plurality of hollow parts 212 smoothly, making it possible to suppress the decrease in elastic function due to a so-called sucking effect.
(4) For example, in the aforementioned second embodiment, the elastic part 210a has the honeycomb structure and the plurality of hollow parts 212 included in the elastic part 210a have the hexagonal shape in the Y-Z plan view. However, the present disclosure is not limited to this example. The hollow parts 212 do not need to have the honeycomb structure. The hollow parts 212 may be arranged randomly. The shape of the hollow part 212 in the Y-Z plan view may be other than the hexagonal shape, for example, a circular shape, a triangular shape, a quadrangular shape, or the like. The hollow part 212 may be sectioned in the middle of the space in the thickness direction X (arrangement direction X).

### [Reference Signs List]

10 Battery case
20 Electrode body
100 Rectangular secondary battery
200 Spacer
210, 210a Elastic part
212 Hollow part
213 Protrusion part (projection part)
214 Partition wall (projection part)
216, 216a Base part
220 Heat insulation part
300 Restriction mechanism

## Claims

1. A battery pack (500) comprising:
a plurality of rectangular secondary batteries (100) that are disposed along a predetermined arrangement direction (X); and
a spacer (200) that is disposed between the rectangular secondary batteries (100) that are adjacent in the arrangement direction (X), wherein
the spacer (200) includes an elastic part (210), and
**characterized in that** the elastic part (210) satisfies the following conditions:
(1) an elastic modulus, which is obtained as an inclination of an approximation line A in a range of a compression ratio from 1 to 20% from a compression load-compression ratio curve (horizontal axis: compression ratio, vertical axis: compression load) formed by performing compression until a compression load becomes 3.9 MPa in the arrangement direction (X) at a compression speed of 12 kPa/min, is 1 MPa or more and 10 MPa or less, and
(2) a constant load compression ratio, which is obtained as a value of the horizontal axis at an intersection between the compression load-compression ratio curve and a straight line B obtained by multiplying the inclination of the approximation line A by 1.4, is 35% or more and 70% or less,
wherein the elastic part (210) has a honeycomb structure and includes partition walls (214) extending along the arrangement direction (X), and a plurality of hollow parts (212) sectioned by the partition walls (214) and arranged regularly in the arrangement direction (X).

2. The battery pack (500) according to claim 1, wherein
the elastic part (210) includes a projection part (213) extending in the arrangement direction (X),
the projection part (213) includes a contact region (CA) in contact with the rectangular secondary battery (100), and
a ratio (r/S) of an outer peripheral length r (mm) of the contact region (CA) to an area S (mm²) of the contact region (CA) is 0.6 or more and 2.7 or less.

3. The battery pack (500) according to claim 1 or 2, wherein the spacer (200) further includes a heat insulation part (220) disposed between the elastic part (210) and the rectangular secondary battery (100) in the arrangement direction (X) and having lower heat conductivity than the elastic part (210).

4. The battery pack (500) according to any one of claims 1 to 3, wherein the elastic modulus of the elastic part (210) is 1 MPa or more and 3.3 MPa or less.

## Patentansprüche

1. Batteriepack (500), aufweisend:
eine Vielzahl von rechteckigen Sekundärbatterien (100), die entlang einer vorgegebenen Anordnungsrichtung (X) angeordnet sind; und
einen Abstandhalter (200), der zwischen den in der Anordnungsrichtung (X) benachbarten rechteckigen Sekundärbatterien (100) angeordnet ist, wobei
der Abstandhalter (200) einen elastischen Teil (210) umfasst, und
**dadurch gekennzeichnet ist, dass** der elastische Teil (210) die folgenden Bedingungen erfüllt:
(1) einen Elastizitätsmodul, der als eine Neigung einer Näherungsgeraden A in einem Bereich eines Kompressionsverhältnisses von 1 bis 20 % aus einer Kompressionslast-Kompressionsverhältnis-Kurve (horizontale Achse: Kompressionsverhältnis, vertikale Achse: Kompressionslast) ermittelt wird, die durch Durchführen einer Kompression entsteht, bis eine Kompressionslast in der Anordnungsrichtung (X) bei einer Kompressionsgeschwindigkeit von 12 kPa/min 3,9 MPa entspricht, und der 1 MPa oder mehr und 10 MPa oder weniger beträgt, und
(2) ein konstantes Druckbelastungsverhältnis, das als ein Wert der horizontalen Achse an einem Schnittpunkt zwischen der Kompressionslast-Kompressionsverhältnis-Kurve und einer Geraden B ermittelt wird, die durch Multiplikation der Neigung der Näherungsgeraden A mit 1,4 erhalten wird, und das 35 % oder mehr und 70 % oder weniger beträgt,
wobei der elastische Teil (210) eine Wabenstruktur aufweist und Trennwände (214) beinhaltet, die sich entlang der Anordnungsrichtung (X) erstrecken, sowie eine Vielzahl von Hohlräumen (212), die durch die Trennwände (214) unterteilt und in der Anordnungsrichtung (X) regelmäßig angeordnet sind.

2. Batteriepack (500) nach Anspruch 1, wobei
der elastische Teil (210) einen sich in der Anordnungsrichtung (X) erstreckenden Vorsprungsteil (213) aufweist,
der Vorsprungsteil (213) einen Kontaktbereich (CA) aufweist, der mit der rechteckigen Sekundärbatterie (100) in Kontakt steht, und
ein Verhältnis (r/S) einer Außenumfangslänge r (mm) des Kontaktbereichs (CA) zu einer Fläche S (mm²) des Kontaktbereichs (CA) 0,6 oder mehr und 2,7 oder weniger beträgt.

3. Batteriepack (500) nach Anspruch 1 oder 2, wobei der Abstandhalter (200) ferner einen Wärmeisolierteil (220) umfasst, der in der Anordnungsrichtung (X) zwischen dem elastischen Teil (210) und der rechteckigen Sekundärbatterie (100) angeordnet ist und eine geringere Wärmeleitfähigkeit als der elastische Teil (210) aufweist.

4. Batteriepack (500) nach einem der Ansprüche 1 bis 3, wobei der Elastizitätsmodul des elastischen Teils (210) 1 MPa oder mehr und 3,3 MPa oder weniger beträgt.

## Revendications

1. Un bloc-batterie (500) comprenant :
une pluralité de batteries secondaires rectangulaires (100) disposées selon une direction d'agencement prédéterminée (X) ; et
une entretoise (200) disposée entre les batteries secondaires rectangulaires (100) adjacentes dans la direction d'agencement (X), dans lequel
l'entretoise (200) comprend une partie élastique (210), et
**caractérisé en ce que** la partie élastique (210) satisfait aux conditions suivantes :
(1) un module d'élasticité, qui est obtenu comme pente d'une droite d'approximation A dans une plage de rapport de compression de 1 à 20 % à partir d'une courbe charge de compression-rapport de compression (axe horizontal : taux de compression, axe vertical : charge de compression) obtenue en appliquant une compression jusqu'à ce que la charge de compression atteigne 3,9 MPa dans la direction d'agencement (X) à une vitesse de compression de 12 kPa/min, est de 1 MPa à 10 MPa, et
(2) un rapport de compression à charge constante, obtenu comme valeur de l'axe horizontal au point d'intersection entre la courbe charge de compression-rapport de compression et une droite B obtenue en multipliant la pente de la droite d'approximation A par 1,4, est de 35 % à 70 %,
dans lequel la partie élastique (210) présente une structure en nid d'abeilles et comprend des parois de séparation (214) s'étendant le long de la direction d'agencement (X), ainsi qu'une pluralité de parties creuses (212) délimitées par les parois de séparation (214) et disposées régulièrement dans la direction d'agencement (X).

2. Le bloc-batterie (500) selon la revendication 1, dans lequel
la partie élastique (210) comprend une partie en saillie (213) s'étendant dans la direction d'agencement (X),
la partie en saillie (213) comprend une zone de contact (CA) en contact avec la batterie secondaire rectangulaire (100), et
le rapport (r/S) entre la longueur périphérique extérieure r (mm) de la zone de contact (CA) et la surface S (mm²) de la zone de contact (CA) est de 0,6 à 2,7.

3. Le bloc-batterie (500) selon la revendication 1 ou 2, dans lequel l'entretoise (200) comprend en outre une partie d'isolation thermique (220) disposée entre la partie élastique (210) et la batterie secondaire rectangulaire (100) dans la direction de montage (X) et présentant une conductivité thermique inférieure à celle de la partie élastique (210).

4. Le bloc-batterie (500) selon l'une quelconque des revendications 1 à 3, dans lequel le module d'élasticité de la partie élastique (210) est de 1 MPa à 3,3 MPa.
